# EUROPÄISCHE PATENTSCHRIFT

(11) **EP 0 498 764 B1**
(45) Veröffentlichungstag und Bekanntmachung des Hinweises auf die Patenterteilung: **27.03.1996**
(21) Anmeldenummer: 92810055.1
(22) Anmeldetag: 27.01.1992
(51) Int. Cl.: B29C 53/50, B29C 65/18

(54) **Vorrichtung zur Herstellung von Rohrkörpern**
Apparatus for producing tubular articles
Appareil pour la fabrication de corps tubulaires

(30) Priorität: 05.02.1991 CH 339/91
(43) Veröffentlichungstag der Anmeldung: 12.08.1992
(73) Patentinhaber: KMK LIZENCE LTD., Chaussée, Port Louis (MU)
(72) Erfinder: Burger, Hans, CH-8330 Pfäffikon (CH)
(74) Vertreter: Peege, Klaus

(56) Entgegenhaltungen:
- EP-A- 0 409 021
- GB-A- 1 220 099
- US-A- 2 441 940

## Beschreibung

Die Erfindung betrifft eine Vorrichtung zur Herstellung von Rohrkörpern nach dem Oberbegriff des Patentanspruches 1.

Eine solche Vorrichtung ist aus der EP-A-0 409 021 bekannt.

Rohrkörper für Verpackungstuben werden aus einem aus einem einen schweissbaren Kunststoff umfassenden Folienband hergestellt, dessen Längskanten überlappend thermisch miteinander verbunden werden. Die thermische Verbindung erfolgt in Vorrichtungen der im Oberbegriff des Anspruches 1 näher erläuterten Gattung auch Längsnahtschweissmaschinen oder "side seamers" genannt.

Bekannte Längsnahtschweissmaschinen umfassen aus übereinander angeordneten umlaufenden, metallischen Bändern, zwischen denen die Längskanten des Folienbandes aufgenommen sind. Durch Einwirkung von Wärme und Druck auf die Bänder wird der Werkstoff der überlappten Längskanten aufgeschmolzen und vereinigt. Anschliessend wird die so gebildete Naht in der Maschine durch auf die Bänder wirkende Kühleinrichtungen zu ihrer Verfestigung gekühlt.

Bei den bekannten Vorrichtungen läuft das obere Band um Rollensätze um, wobei zwischen einem oberen und unteren Bandlauf auf den unteren Bandlauf einwirkend die Einrichtungen zur Wärmeerzeugung, Verpressung und Kühlung angeordnet sind. Das untere Band läuft in dem Teil der bekannten Vorrichtungen, in dem die Aufschmelzung, Verpressung und Kühlung also die eigentliche Schweissnahtbildung erfolgt, gleichgerichtet wie die obere Bandanordnung in einem Dorn um.

Ein oberer Bandlauf des unteren Bandes ist dabei auf der Oberfläche des Dornes geführt und wirkt mit dem unteren Bandlauf des oberen Bandes im Sinne eines Widerlagers zusammen, während der untere Bandlauf des unteren Bandes am Dorn umgelenkt und in dem Dorn zurückgeführt wird.

Bekannt ist, den oberen Bandlauf des unteren Bandes vor Auflauf auf den Dorn vermittels äusserer auf den oberen Bandlauf wirkender Heizeinrichtungen aufzuheizen. Auch bekannt ist, im Dorn Heizeinsätze vorzusehen, auf denen der obere Bandlauf des unteren Bandes läuft. Zur Beschleunigung der Abkühlung der Schweissnaht ist es bekannt, den Dorn in dem Abschnitt, der mit der auf das obere Band einwirkenden Kühleinrichtung zusammenwirkt, zu kühlen.

Die bekannten Dorne setzen einer Steigerung von Arbeitsgeschwindigkeit und Wirtschaftlichkeit von Längsnahtschweissmaschinen Grenzen, die durch die Qualitätsanforderungen an die Schweissnähte gezogen sind. Nicht brauchbar sind Rohrkörper mit Schweissnähten, stellenweise unvollständiger Verschweissung oder mit unverschweissten Ausquetschungen aus den Rändern der überlappenden Längskanten, die das Verpackungsgut in unzulässiger Weise verunreinigen würden.

Zur Vermeidung dieser und anderer Nahtfehler bei hohen Arbeitsgeschwindigkeiten sind der über beide Bänder, d.h. den unteren Bandlauf des oberen Bandes und den oberen Bandlauf des unteren Bandes als Schweisswerkzeuge erfolgende Wärmeeintrag in und Wärmeentzug aus dem Schweissgut in Verbindung mit der Druckeinwirkung auf letzteres, eng abgestimmt auf Aufbau und Werkstoff der Kunststoffolie und auf die Umlaufgeschwindigkeit, d.h. die Arbeitsgeschwindigkeit einer Längsnahtschweissmaschine zu halten.

Bezüglich des oberen Bandes ist eine gute Abstimmbarkeit für Laminate durch eine wirkungsindividuelle Einstellbarkeit einer Aufheizeinrichtung, Druckeinrichtung und Kühleinrichtung, die konstruktiv voneinander getrennte Einzelelemente darstellen, somit über die Schweisstrecke wärme- und druckmässig individualisierte Streckenabschnitte bilden, weitgehend gelöst.

Einer vergleichbaren Abstimmbarkeit sind die bekannten Dorne entzogen. Dies liegt daran, dass bei Aufheizung und Kühlung des Bandes vor bzw. im Dorn sich im Band ein in Richtung Kühlung abnehmendes Wärmegefälle einstellt, das gesamthaft einstellbar, für eine gute Abstimmbarkeit jedoch nicht abschnittsweise individualisiert einstellbar ist. Somit bestimmen die bekannte, am Schweissvorgang beteiligten Dorne in nicht unerheblichem Mass die Arbeitsgeschwindigkeit und Wirtschaftlichkeit von Längsnahtschweissmaschinen sowie die Qualität ausgebrachter Schweissnähte.

Hiervon ausgehend hat sich der Erfinder die Aufgabe gestellt, eine Vorrichtung zur Herstellung von Rohrkörpern, insbesondere für Verpackungstuben, aus einem einen schweissbaren Kunststoff umfassenden Folienband mit einem Dorn zu schaffen, dessen Wärmeinhalt über seine Längserstreckung abschnittsweise individualisiert einstellbar ist, und die Aufgabe wird erfindungsgemäss durch die im kennzeichnenden Teil des Anspruches 1 aufgeführten Merkmale gelöst.

Durch die erfindungsgemässe Aufteilung des Dornes in nacheinander angeordnete Abschnitte, deren Temperaturen oder Wärmeinhalte individuell einstellbar sind, wird der Vorteil der Steigerung der Arbeitsgeschwindigkeit von Längsnahtschweissmaschinen unter Ausbringung einwandfreier Schweissnähte hoher Qualität an Tuben aus einem Werkstoff der vorerwähnten Art erreicht.

Ein weiterer Vorteil der erfindungsgemässen Lösung besteht darin, dass durch zeitweilig überhöhte Erwärmung der einzelner Dornabschnitte die Anfahrzeit von Längsnahtschweissmaschinen deutlich reduziert werden kann. Ferner bietet die Lösung nach der Erfindung den Vorteil der Reduktion von Anfahrabfällen aus anfangs nicht oder unbefriedigt verschweisstem Folienmaterial.

Weitere vorteilhafte Ausgestaltungen der Erfindung sind in den dem Anspruch 1 folgenden Ansprüchen aufgeführt.

Weitere Vorteile, Merkmale und Einzelheiten der Erfindung ergeben sich aus der nachfolgenden Beschreibung eines bevorzugten Ausführungsbeispieles sowie anhand der Zeichnungen.

Es zeigen
- Fig. 1:: eine Vorrichtung zur Herstellung von Verpackungstuben in einer schematischen Seitenansicht;
- Fig. 2:: einen Dorn im Rohrbildungsbereich der Vorrichtung gemäss Fig. 1 in vergrössertem Masstab;
- Fig. 3:: ein Formelement im Rohrbildungsbereich in der Vorderansicht;
- Fig. 4:: einen Schnitt durch den Dorn entlang der Schnittlinie I-I in Fig. 2 in der Vorderansicht in vergrössertem Masstab;
- Fig. 5:: einen Dorn gemäss Fig. 2 mit Einsätzen im Längsschnitt.

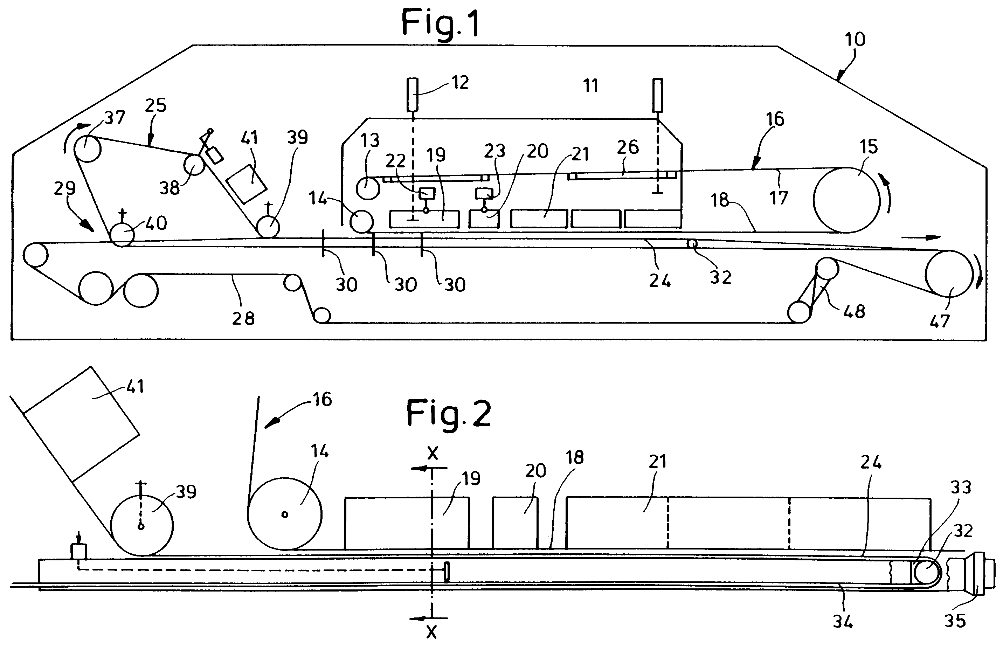

Die in Fig. 1 gezeigte erfindungsgemässe Vorrichtung zur Herstellung rohrförmiger Körper besteht aus einer Grundplatte 10, an der eine Tragplatte 11 in senkrechter Richtung beweglich angelenkt ist.

Die bewegliche Anlenkung erfolgt über Stellglieder 12, die an Grundplatte 10 und Tragplatte 11 angeordnet sind, so dass die Tragplatte 11 in ihrer Stellung vertikal positionier- und festlegbar ist.

Die Tragplatte 11 trägt an ihrem vorderen Ende zwei in Abstand zueinander angeordnete Rollen 13 und 14. In Abstand vom hinteren Ende der Tragplatte 11 ist an der Grundplatte 10 eine Antriebsrolle 15 angeordnet.

Um die Rollen 13 und 14 sowie die Antriebsrolle 15 läuft ein endloses metallisches oberes Band 16 - folgend oberes Transportband 16 genannt - mit einem oberen Bandlauf 17 und unteren Bandlauf 18 um. Zwischen oberem Bandlauf 17 und unterem Bandlauf 18 sind in Bewegungsrichtung des Transportbandes gesehen nacheinander mit dem unteren Bandlauf 18 zusammenwirkend eine Aufheizeinrichtung 19, Druckeinrichtung 20 und Kühleinrichtung 21 vorgesehen, die vom unteren Bandlauf 18 unterfahren werden.

Zum Zwecke der vertikalen Verstellung sind die Aufheizeinrichtung 19 und Druckeinrichtung 20 mit jeweils einem Stellglied 22 und 23 versehen, so dass die Aufheizeinrichtung 19 und Druckeinrichtung 20 vertikal in Richtung des unteren Bandlaufes 18 verstellbar sind.

Die Aufheizeinrichtung 19 umschliesst vorzugsweise eine induktiv wirkende Hochfrequenzheizung, die im Betriebszustand Wärme im unteren Bandlauf 18 und oberen Bandlauf 24 des unteren Bandes 25 - folgend unteres Transportband 25 genannt - erzeugt.

Das obere Transportband 16 und untere Transportband 25 bestehen vorzugsweise aus Metall, sofern deren Aufheizung induktiv mittels Hochfrequenzenergie erfolgt. Da die metallischen Bänder 16 und 25 eine geringe Masse aufweisen, lassen sie sich rasch aufheizen und abkühlen, ohne dass andere Teile der Vorrichtung mit aufgeheizt werden.

Bänder 16 und 25 aus Metall sind bevorzugt, wenn reine Kunststoffolien zur Verschweissung kommen. Enthält eine Kunststoffolie eine Metallfolie, die durch Induktion erwärmt, den Kunststoff aufschmilzt, dann können die Bänder 16 und 25 aus Kunststoff, beispielsweise Polytetrafluorethylen, bestehen.

Die zur induktiven Aufheizung dienende Aufheizeinrichtung 19 weist im wesentlichen eine Hochfrequenzspule auf, deren abgegebene Energie auf den zu erwärmenden Bereich unterhalb der Aufheizeinrichtung 19 konzentriert ist. Gespeist wird die Hochfrequenzspule durch einen Hochfrequenzgenerator bekannter Bauart.

Die der Druckeinrichtung 20 nachgeordnete Kühleinrichtung 21 entzieht der Schweissnaht die zu ihrer Verfestigung überschüssige Wärme, wobei die vorgängige Verpressung mittels der Druckeinrichtung 20, bevorzugt unter Vorerstarrung des Schweissgutes erfolgt.

Der obere Bandlauf 17 überfährt Kühlschienen 26, die den oberen Bandlauf 17 soweit abkühlen, dass er mit etwa konstanter Temperatur der Aufheizeinrichtung 19 zufährt.

Der einen rohrförmigen Körper bildende Teil der Vorrichtung umfasst einen Dorn 27, einen umlaufend angetriebenen Formriemen 28, der auf seiner dem Dorn 27 zugewandten Seite einen Kunststoff-Folienstreifen 29 trägt, und mehrere in Längsrichtung des Dornes 27 in Abstand zueinander angeordnete Formelemente 30, die den Formriemen 28 und den Folienstreifen 29 um den Umfang des Dornes 27 verformen.

Der im Querschnitt gezeigte erfindungsgemäss runde Dorn 27, der gemäss der Erfindung auch mehreckig, vorzugsweise rechteckig sein kann, ist an der Grundplatte 10 angeordnet. Gemäss Fig. 2 erstreckt er sich gleichgerichtet und in Abstand zur Aufheizeinrichtung 19, Druckein-Druckeinrichtung 20 und Kühleinrichtung 21. Auf einer äusseren Oberfläche bewegt sich, in einer Nut 31 in Längsrichtung geführt, der obere Bandlauf 24 des endlosen angetriebenen unteren Transportbandes 25 aus Metall, das am vorderen Ende des Dornes 27 um eine Umlenkrolle 32 gleitet, die im Dorn 27 in einer oben offenen Ausnehmung 33 aufgenommen ist, und als unterer Bandlauf 34 in einer Ausnehmung 49 im Dorn zurückgeführt wird.

Das vordere freie Ende des Dornes 27 trägt eine Scheibe 35, die vom Inneren des Rohrkörpers überfahren wird und dazu bestimmt ist, einem Entweichen von Druckluft in Bewegungsrichtung des Rohrkörpers entgegenzuwirken.

Am hinteren freien Ende des Dornes 27, d.h. im Bereich der Aufheizeinricdhtung 19 ist keine Schikane dieser Art vorgesehen, da hier durch die Folie/Formriemenbewegung nur ein geringer Druckabfall auftritt.

Die Druckluft, die im Bereich der Aufheizeinrichtung 19 über Luftleitungen 50, 51, 52 in den Rohrkörper eingebracht wird, dient zur Reibungsverminderung zwischen Folie 29 und Dorn 27 und bei entsprechender Druckeinstellung auch zur Aufweitung des Rohrkörperdurchmessers zum Ausgleich von Durchmessertoleranzen, die die Weiterverarbeitung der Rohrkörper, insbesondere ihre Ausstattung mit Tubenköpfen, erschweren.

Die Nut 31 ist bodenseitig mit einer Beschichtung 36 einerseits zur Reibungsverminderung und andererseits zur elektrischen Isolation versehen. Zwischen oberem Bandlauf 24 des unteren Transportbandes 25 und unterem Bandlauf 18 des oberen Transportbandes 16 wird so ein Spalt gebildet, in dem überlappende Ränder der Folie 29 zur Bildung einer in Längsrichtung verlaufenden Schweissnaht zunächst aufgeschmolzen, mit überfliessenden Schnittkanten verpresst und anschliessend gekühlt werden.

Gemäss Fig. 1 läuft das untere Transportband 25 um eine an der Grundplatte 10 fest angeordnete Antriebsrolle 37, eine an seiner Innenseite angeordnete frei drehbare Einstellrolle 38, eine an seiner Aussenseite angeordnete Einstellrolle 39, die den oberen Bandlauf 24 in die Führungsnut 31 des Dornes 27 einleitet und in Zusammenwirken mit der Umlenkrolle 32 den horizontalen Gleichlauf zum Boden der Führungsnut 31 gewährleistet, eine in seiner Achslage nicht verstellbare Umlenkrolle 32 und eine Einstellrolle 40.

Zur Erwärmung des unteren Transportbandes 25 auf mindestens die Eintrittstemperatur des unteren Bandlaufes 18 in die Aufheizeinrichtung 19 ist vor der Einstellrolle 39 eine Heizung 41, vorzugsweise in Form einer Hochfrequenzspule, vorgesehen.

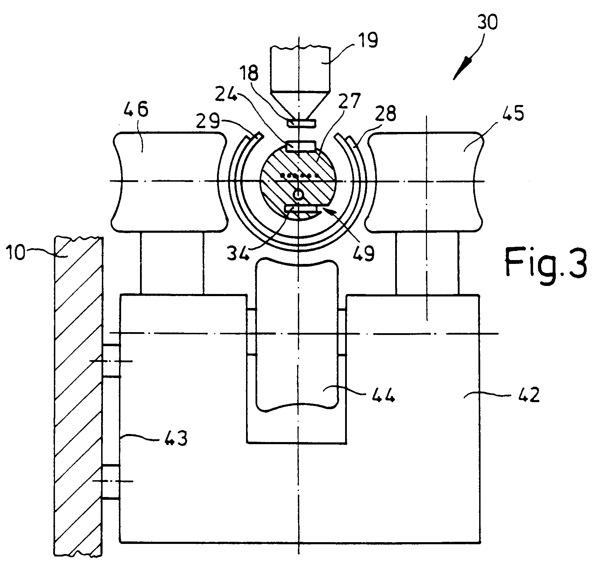

Fig. 3 zeigt ein Formelement 30 mit innerhalb des Formelementes 30 gelagertem Dorn 27 im Schnitt und der oberhalb des Dornes 27 angeordneten Aufheizeinrichtung 19. Das Formelement 30 besteht aus einem Trägerblock 42, der an seiner Seite 43 an der Grundplatte 10 befestigt ist. Das Formelement 30 trägt drei frei drehbare Formrollen 44, 45 und 46. Die unterhalb des Dornes 27 angeordnete Formrolle 44 dreht um eine waagerechte Achse, während die jeweils seitlich zum Dorn 27 angeordneten Formrollen 45 und 46 um senkrechte Achsen drehen, die exzentrisch zur Feineinstellung der Grösse des Überlappungsbereiches der Folienränder einstellbar sind.

Vom ersten Formelement 30 ausgehend bis zu dem Formelement 30, das Ränder einer Folie 29 in Überlappung auf dem oberen Bandlauf 29 des Transportbandes 25 positioniert, nehmen die Abstände der waagrechten und senkrechten Drehachsen auf den Mittelpunkt des Dornes 27 hin ab, so dass die Konvex geformten Laufflächen der Formrollen 44, 45, 46 den zwischen Laufrollen 44, 45, 46 und Dorn 27 laufenden Formriemen 28 mit aufliegender Folie 29 in Längsrichtung um den Dorn 27 lenken. Die Breite des Formriemens 28 ist geringer als die der aufliegenden Folien 29.

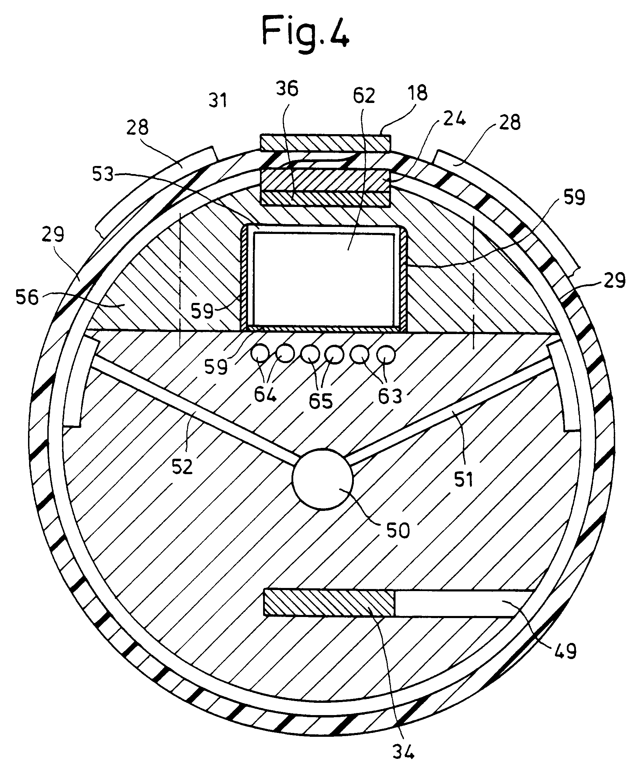

Gemäss Fig. 4 erfolgt die Anlenkung der Folie 29 an den Dorn 27 nur soweit, dass Ränder der Folie 29 sich zwischen unteren Bandlauf 18 des oberen Transportbandes 16 und oberem Bandlauf 24 des unteren Transportbandes 25 überlappen und von den Rändern des Formriemens 28 in dieser Lage gehalten werden, die innere Oberfläche des so gebildeten Tubenrohres zur Vermeidung von Reibungskräften an der äusseren Oberfläche des Dornes 27 jedoch nicht anliegt.

Dadurch wird bei Kunststoffolien, eingeschlossen Laminate aus Kunststoffolien verschiedener chemischer Zusammensetzung und Kunststoff-Laminatfolien einschliessend, einer Folien aus Metall, z.B. Aluminium, ein Dehnen des Rohres sowie ein Abreissen der in der Aufheizvorrichtung 19 aufgeschmolzenen Überlappung von dem angrenzend nicht aufgeschmolzenen Werkstoff der Rohrwandung verhindert, was eine gleichbleibend dichte und an ihren äusseren Rändern rissfreie Schweissnaht gewährleistet. Sobald die Schweissnaht durch Wärmeentzug eine vorbestimmte mechanische Festigkeit und Formbeständigkeit aufweist, nehmen die Achsabstände der Formrollen 44, 45, 46 vom Mittelpunkt des Dornes 27 aus wieder zu, so dass sich der Formriemen 28 öffnet und der Formriemen 28 mit Rohr nach Freigabe des Rohres vom unteren Bandlauf 18 und oberen Bandlauf 24 vom Dorn 27 im wesentlichen in Längsrichtung zum Dorn 27 ablaufen kann.

Gemäss Fig. 1 wird der endlose vorzugsweise aus leicht umformbaren faserverstärktem Kunststoff bestehende Formriemen 28 über eine Antriebsrolle 47 angetrieben, über eine Bandspanneinrichtung 48 und um weitere Umlenkrollen geführt.

Die Antriebsrolle 47, die Bandspanneinrichtung 48 und die Umlenkrollen sind in derartig bemessenem Abstand an der Grundplatte 10 angeordnet, dass die Mittellinie des Formriemens 28 mit der senkrechten Mittel linie des Dornes 27 zusammenfällt, so dass sich die Kanten des Formriemens 28 bei Durchlauf durch die Formelemente 30, gegebenenfalls unterstützt durch eine Exzentereinstellung der Formrollen 45, 46 stets in einer wesentlichen waagerechten Ebene gegenüberliegen, wodurch ein in seiner Breite genau bemessener Überlappungsbereich gewährleistet ist (Fig. 4.)

Für die Erzeugung einer einwandfreien Schweissnaht an rohrförmigen Körpern aus Kunststoffen umfassenden Folien hat es sich insbesondere für deren Oberflächenausbildung und zur Vermeidung von Ausquetschungen aufgeschmolzenen Kunststoffes entlang den inneren und äusseren Rändern des Oberlappungsbereiches sowie zur Vermeidung von Spannungen und Dehnungen in und an den Rändern der Schweissnaht als vorteilhaft erwiesen, wenn die Transportbänder 16 udn25 und der Formriemen 28 in gleicher Umlaufgeschwindigkeit laufen, also keine Relativbewegung zwischen unterem Bandlauf 18 und überlappenden Rändern der Folie 29, den überlappenden Rändern der Folie 29 und dem oberen Bandlauf 24 und zwischen dem Formriemen 28 und darauf aufliegender Folie 29 besteht, wodurch die überlappenden Folienränder zwischen den laufenden Transportbändern 16 und 25 in Ruhelage aufgeschmolzen, vorerstarrt, verpresst und abgekühlt werden.

Zu diesem Zweck werden die Antriebsrollen 15, 37 und 47 in ihrer Antriebsdrehzahl aufeinander abgestimmt gesteuert.

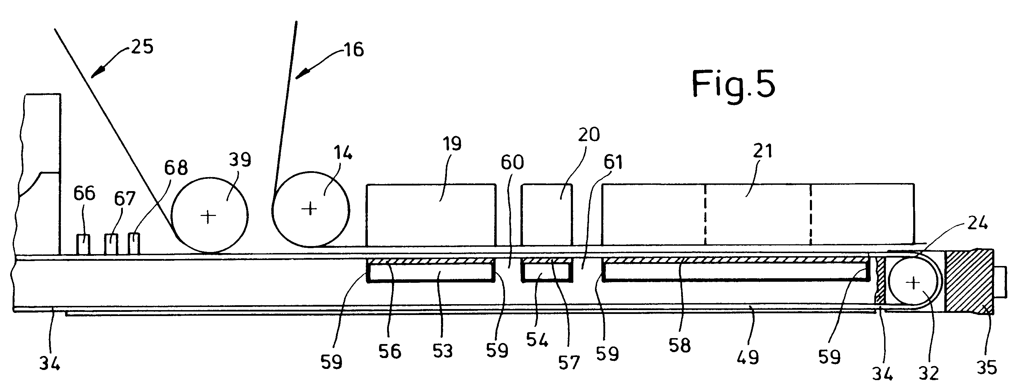

Gemäss Fig. 5 ist der Dorn 27 so ausgestaltet, dass er drei Hohlräume 53, 54 und 55 aufweist, wobei der Hohlraum 53 unterhalb der Aufheizeinrichtung 19, der Hohlraum 54 unterhalb der Druckeinrichtung 20 und der Hohlraum 55 unterhalb der Kühleinrichtung angeordnet ist.

Die Hohlräume 53. 54, 55 sind in Einsätzen 56, 57, 58 aufgenommen, die den Dorn 27 in ihrer Breite etwa den Längserstreckungen der Aufheizeinrichtung 19, Druckeinrichtung 20 und Kühleinrichtung 21 entsprechend in Ausnehmungen quer durchgreifen und mit dem Dorn 27 den äusseren Umfang teilen.

Fig. 2 zeigt den Einsatz 56 in Einbaulage im Querschnitt, während Fig. 5 die Einsätze 56, 57 und 58 in Einbaulage im Dorn im Längsschnitt zeigt. Mit Ausnahme der dem oberen Bandlauf 24 des Transportbandes 25 zugewandten Wandungsflächen sind bevorzugt alle anderen Wandungsflächen der Hohlräume 53, 54, 55 mit einer Isolierung 59 versehen, so dass die Hohlräume 53, 54, 55 gegen den Dorn 27, die Einsätze 56, 57, 58 und die Stege 61, 62 isoliert sind, so dass sich die Wärmeinhalte der Hohlräume 53, 54, 55 auf den sie überfahrenden oberen Bandlauf 24 und nicht auf den Dorn überträgt, wodurch ein Wärmegefälle im Dorn von der Aufheizeinrichtung 19 zur Kühleinrichtung 21 unterbunden, und Wärmeinhalte des Dornes sektoriell auf das Schweissgut individuell abgestellt einstellbar werden.

Nach Fig. 2 ist in den Hohlraum 53 eine elektrische Widerstandsheizung 62 aufgenommen, die über Leitungen 62 gespeist wird. Nach der Erfindung ist es auch möglich, die Heizung als eine Induktionsheizung auszubilden, beide Heizungen sind in ihren Leistungen in weiten Bereichen einstellbar. Auch ist es möglich, den Hohlraum 53 bei entsprechend ausgebildeten Zu- und Ableitungen vermittels gasförmiger oder flüssiger Medien durchströmbar auszubilden.

Der Hohlraum 54 ist über Förderleitungen 64 und der Hohlraum 55 über Förderleitungen 65 (jeweils eine Zu- und Ableitung) mittels flüssigen oder gasförmigen Medien beaufschlagbar, die in ihrem Wärmeinhalt so einstellbar sind, dass die den Hohlräumen entsprechenden Bandabschnitte des Bandlaufes 24 kühl- oder aufheizbar sind.

Bevorzugt aufgeheizt werden die Hohlräume 54, 55 und 56 bei Anfahren der Längsnahtschweissmaschine, um Anfahr-Folienabfälle möglichst gering zu halten. Danach kann der Wärmeinhalt der Hohlräume 54, 55, 56 beispielsweise durch Senkung der Temperaturen der Heizung und/oder der gasförmigen oder flüssigen Medien auf eine Erwärmung, vorerstarrte Verpressung und anschliessende Kühlung je nach zu verarbeitender Kunststoffart auf optimale Werte eingestellt werden.

## Patentansprüche

1. Vorrichtung zur Herstellung von Rohrkörpern, insbesondere für Verpackungstuben aus einem einen schweissbaren Kunststoff umfassenden Folienstreifen (29), dessen Längskanten thermisch miteinander verbunden sind, mit einem Dorn (27) und einem Formriemen (28), der das Folienband um den Dorn (27) zu einem Rohrkörper formt, einem unteren Transportband (25) mit oberem (24) und unterem Bandlauf (34), das am Dorn (27) umläuft, einem oberen Transportband (16) mit oberem (17) und unterem Bandlauf (18), wobei zwischen dem oberen Bandlauf (24) des unteren Transportbandes (25) und dem unterem Bandlauf (18) des oberen Transportbandes (16) die Längskanten des Folienstreifens (29) aneinandergelegt sind, Einrichtungen zum Antrieb (15,37) der Transportbänder (16,25), eine auf den unteren Bandlauf (18) des oberen Tansportbandes (16) einwirkende, den Kunststoff der Längskanten aufschmelzende Aufheizeinrichtung (19), eine unter Vorerstarrung die aufgeschmolzenen Längskanten verpressende Druckeinrichtung (20) und eine der Druckeinrichtung (20) nachgeordnete Kühleinrichtung (21) zur vollständigen Erstarrung des Kunststoffes, gekennzeichnet durch Einrichtungen zur Einstellung der Temperatur (41) des oberen Bandlaufes (24) des unteren Transportbandes (25) zusammenwirkend mit dem unteren Bandlauf (18) in individuellen Bereichen, an der Aufheizeinrichtung (19), Druck-einrichtung (20) und der Kühleinrichtung (21) bestehend aus wenigstens ersten (53), zweiten (54) und dritten (55), sich in Längsrichtung des Dornes (27) ersteckenden, durch Wandungen umgrenzten Hohlräumen, die der obere Bandlauf (24) des unteren Transportbandes (25) nacheinander überfährt, wobei die Hohlräume (53,54,55) in Einsätzen (56,57,58) aufgenommen sind, deren jeweilige Länge und Breite im wesentlichen der entsprechenden Länge und Breite der Aufheizeinrichtung (19), Druckeinrichtung (20) und Kühleinrichtung (21) entsprechen, und diese mit Einrichtungen zur Einstellung der Wärmeinhalte, der Einsätze (56,57,58) versehen sind, wobei mit Ausnahme der in Richtung des oberen Bandlaufes (24) des unteren Transportbandes (25) angeordneten Flächen die Wandungen der Einsätze (56,57,58) mit Isolationen ausgestattet sind.

2. Vorrichtung nach Anspruch 1, dadurch gekennzeichnet, dass die Einrichtungen zur Einstellung der Wärmeinhalte der Einsätze (56,57,58) fliessende Medien sind.

3. Vorrichtung nach Anspruch 2, dadurch gekennzeichnet, dass die fliessenden Medien Gas sind.

4. Vorrichtung nach Anspruch 2, dadurch gekennzeichnet, dass die fliessenden Medien Flüssigkeiten sind.

5. Vorrichtung nach Anspruch 1, dadurch gekennzeichnet, dass der mit der Aufheizeinrichtung (19) zusammenwirkende Einsatz (56) eine einstellbare elektrische Widerstandsheizung aufweist.

6. Vorrichtung nach Anspruch 5, dadurch gekennzeichnet, dass der erste Einsatz (56) eine Induktionsheizeinrichtung aufweist.

## Claims

1. Apparatus for the production of a tubular body, especially for packaging tubes from a foil strip (29) which includes a weldable plastic material and the longitudinal edges of which are thermally joined together, comprising a mandrel (27), a shaping belt (28) adapted to shape the foil strip (29) around the mandrel (27) to provide a tubular body, a lower transportation belt (25) having an upper (24) and lower belt run (34) which runs against the mandrel (27), an upper transportation belt (16) having an upper (17) and lower belt run (18), whereby between the upper belt run (24) of the lower transportation belt (25) and the lower belt run (18) of the upper transportation belt (16) said longitudinal edges of the foil strip (29) are received in mutually overlapping relationship, means (15,37) for driving the transportation belts (16,25), a heating means (19) adapted to act on the lower belt run (18) of the upper transportation belt (16) causing said longitudinal edges to fuse, a pressing means (20) for pressing said fused longitudinal edges with prehardening of the plastic material, a cooling means (21) arranged downstream of the pressing means (20) for completing hardening of the plastic material, characterized thereby that means (41) are provided for adjusting the temperature of the upper belt run (24) of the lower transportation belt (25) associated with the lower belt run (18) in individual regions, at each of the heating means (19) pressing means (20) and cooling means (21), including at least first (53), second (54) and third (55) cavities in the longitudinal extent of the mandrel (27), said cavities (53,54,55) having walls, over which cavities the upper belt run (24) of the lower transportation belt (25) is adapted to succesively pass, with the cavities (53,54,55) provided in inserts (56,57,58) wherein the length and width of the cavities (56,57,58) at least substantially corresponds to the length and width of the heating means (19), pressing means (20) and cooling means (21), respectively, said cavities (56,67,58) are provided with means for adjusting the temperatures and of the cavities (56,57,58), wherein walls of the cavities (56,67,58) excluding those walls facing the upper belt run (24) of the lower transportation belt (25) are provided with insulating means.

2. Apparatus according to claim 1, characterized thereby that the means for adjusting the temperatures of the cavities (56,57,58) is a fluid agent means.

3. Apparatus according to claim 2, characterized thereby that said fluid agent means utilizes a gas.

4. Apparatus according to claim 2, characterized thereby that said fluid agent means utilizes a liquid.

5. Apparatus according to claim 1, characterized thereby that the first cavity (56) operatively associated with the heating means (19) includes an adjustable electric resistance heating means.

6. Apparatus according to claim 5, characterized thereby that the first cavity (56) includes an induction heating means.

## Revendications

1. Dispositif pour la fabrication de corps tubulaires, en particulier pour des tubes d'emballage réalisés à partir d'une bande de film (29) comprenant une matière synthétique soudable, et dont les arêtes longitudinales sont assemblées mutuellement par voie thermique, comportant un mandrin (27) et une courroie de mise en forme (28) qui moule la bande de film autour du mandrin (27) en formant un corps tubulaire, un tapis convoyeur (25) inférieur, à parcours supérieur (24) et inférieur (34) qui tourne autour du mandrin (27), un tapis convoyeur supérieur (16) à parcours supérieur (17) et inférieur (18), les arêtes longitudinales de la bande de film (29) étant juxtaposées bord à bord entre le parcours supérieur (24) du tapis inférieur (25) et le parcours inférieur (18) du tapis supérieur (16), des dispositifs pour l'entraînement (15, 37) des tapis convoyeurs (16, 25), un dispositif de chauffe (19) qui agit sur le parcours inférieur (18) du tapis convoyeur supérieur (16) et fait fondre la matière synthétique des arêtes longitudinales, un dispositif de compression (20) qui comprime les arêtes longitudinales fondues en cours de présolidification et un dispositif de réfrigération (21), monté en aval du dispositif de compression (20), pour la solidification complète de la matière synthétique, caractérisé par la présence sur le dispositif de chauffe (19), le dispositif de compression (20) et le dispositif de réfrigération (21), de dispositifs de réglage de la température (41) du parcours supérieur (24) du tapis inférieur (25) qui, dans certaines zones individualisées, coopère avec le parcours inférieur (18), ces dispositifs de réglage de la température étant constitués d'au moins des premières (53), des deuxièmes (54) et des troisièmes (55) cavités, entourées de parois et qui s'étendent dans la direction longitudinale du mandrin (27), et sur lesquelles le parcours supérieur (24) du tapis inférieur (25) passe successivement, lesdites cavités (53, 54, 55) étant logées dans des inserts (56, 57, 58) dont les longueurs et les largeurs respectives correspondent sensiblement aux longueurs et largeurs respectives du dispositif de chauffe (19), de compression (20) et de réfrigération (21), ces cavités étant pourvus de dispositifs de réglage de la teneur calorique des inserts (56, 57, 58), tandis que, à l'exception des faces disposées en direction du parcours supérieur (24) du tapis supérieur (25), les parois desdits inserts (56, 57, 58) sont munies de garnitures isolantes.

2. Dispositif selon la revendication 1, caractérisé en ce que les dispositifs de réglage des teneurs caloriques des inserts (56, 57, 58) sont des fluides.

3. Dispositif selon la revendication 2, caractérisé en ce que les fluides sont des gaz.

4. Dispositif selon la revendication 2, caractérisé en ce que les fluides sont des liquides.

5. Dispositif selon la revendication 1, caractérisé en ce que l'insert (56), qui coopère avec le dispositif de chauffe, (19) est équipé d'un chauffage à résistances électriques réglable.

6. Dispositif selon la revendication 1, caractérisé en ce que le premier insert (56) est équipé d'un dispositif de chauffage par induction.
